# FASCICULE DE BREVET EUROPEEN

(11) **EP 0 408 443 B1**
(45) Date de publication et mention de la délivrance du brevet: **15.06.1994**
(21) Numéro de dépôt: 90401984.1
(22) Date de dépôt: 10.07.1990
(51) Int. Cl.: G01F 1/06

(54) **Compteur de liquide à jets multiples**
Mehrstrahlflüssigkeitszähler
Multiple jet liquid meter

(30) Priorité: 11.07.1989 FR 8909291
(43) Date de publication de la demande: 16.01.1991
(73) Titulaire: SAPPEL Société Anonyme française, 68304 Saint-Louis (FR)
(72) Inventeur: Dupeche, Alain, F-68110 Illzach (FR); Roy, Daniel, F-68300 Saint Louis (FR); Zimmermann, Aimé, F-68700 Steinbach (FR)
(74) Mandataire: Ballot, Paul Denis Jacques

(56) Documents cités:
- BE-A- 343 935
- CH-A- 485 200
- FR-A- 403 414
- GB-A- 499 720

## Description

La présente invention concerne un compteur de liquide à jets multiples, du genre dans lequel une turbine reliée à un totalisateur est montée en rotation dans une cuve cylindrique munie, à la partie inférieure de sa périphérie, d'orifices d'injection du liquide, et, à sa partie supérieure, de moyens pour évacuer le liquide vers la sortie du compteur.

Dans un tel compteur, le liquide qui est très souvent de l'eau, et qui pénètre dans le bas de la cuve cylindrique, frappe les pales de la turbine en faisant tourner celle-ci, et il progresse vers le haut selon une trajectoire sensiblement hélicoïdale.

Le totalisateur du compteur est relié à sa turbine par une transmission mécanique ou magnétique, et il fournit le volume d'eau qui traverse le dispositif. Bien entendu, ses indications ne sont correctes que dans la mesure où la vitesse de rotation de la turbine est proportionnelle au débit ou au volume du liquide traversant.

Or, cette condition est difficile à réaliser aux faibles débits pour lesquels le liquide est animé d'une vitesse si basse que son énergie cinétique ne peut vaincre des résistances élevées, ce qui suppose l'emploi de compteurs dont l'équipage mobile oppose un couple résistant minimal.

Il en résulte que l'on est obligé de sacrifier certains dispositifs habituellement utilisés pour leurs avantages, mais consommateurs d'énergie motrice. Parmi ceux-ci figure la transmission magnétique du mouvement rotatif de la turbine au totalisateur du compteur à travers une cloison étanche, ce procédé présentant l'avantage d'une étanchéité parfaite du compteur, mais l'inconvénient d'un couple résistant non négligeable.

Par ailleurs, le document BE-A-343935 décrit un compteur de liquide dont la cuve étagée comporte un étage de mesure inférieur dans lequel une turbine est montée en rotation suivi vers le haut et sans obstacle à l'écoulement du liquide, par un étage collecteur de diamètre plus important.

Le but de la présente invention est donc de créer un compteur du genre spécifié ci-avant dont le rendement soit tel qu'on puisse lui adjoindre un accouplement magnétique sans dommage pour les qualités métrologiques du compteur aux très faibles débits.

Selon l'invention, ce but, et d'autres qui apparaîtront par la suite, comme la réalisation d'un appareil simple, robuste et relativement peu coûteux, sont atteints grâce à un compteur du genre spécifié plus haut dans lequel la cuve est une cuve étagée comportant au moins un étage de mesure inférieur dans lequel la turbine du compteur est montée en rotation et qui est suivi vers le haut par un étage collecteur de diamètre plus important, caractérisé par le fait que ledit diamètre de l'étage collecteur est nettement plus important que celui de l'étage de mesure inférieur, et par le fait que ledit étage collecteur est suivi vers le haut par un étage d'écoulement de diamètre plus important.

Grâce à cette disposition, on supprime largement les turbulences qui sont habituellement créées aux orifices de sortie du liquide et qui nuisent au bon fonctionnement de la turbine en produisant des forces antagonistes indésirables. Ceci permet d'améliorer le rendement hydraulique de la turbine dans une mesure suffisante pour qu'on puisse lui associer un accouplement magnétique sans nuire aux qualités du compteur aux très faibles débits.

On augmente encore ce rendement, selon une forme de réalisation particulièrement avantageuse de la présente invention, lorsque les orifices d'injection du liquide sont constitués par deux buses d'injection qui débouchent dans l'étage de mesure spécifié plus haut en deux points diamétralement opposés et qui sont orientées vers le centre des pales de la turbine. Cette disposition, par sa symétrie, confère au système l'équilibre hydraulique caractéristique des compteurs à jets multiples.

Avantageusement, l'étage d'écoulement de diamètre plus important comprend les moyens utilisés pour évacuer le liquide vers la sortie du compteur.

De préférence, une cloison annulaire présentant au moins une lumière prolonge vers le haut la périphérie de l'étage collecteur du système, en s'étendant sur toute la hauteur de son étage d'écoulement, le ou les canaux d'écoulement annulaires ainsi ménagés entre cette cloison et la paroi latérale de l'étage d'écoulement étant en communication avec la sortie du compteur.

On comprend que le liquide achève ainsi son déplacement hélicoïdal ascendant en pénétrant, sous l'effet de sa vitesse et de la force centrifuge, dans le ou les canaux annulaires spécifiés plus haut, à travers la ou les lumières ménagées dans leur paroi, sans perturber l'écoulement dans les étages inférieurs.

Une tubulure de forme appropriée permet finalement d'acheminer le liquide vers l'orifice de sortie du compteur, par exemple à travers un puits qui est ménagé dans la paroi latérale de la cuve de l'appareil, parallèlement à l'axe de celle-ci, et dans lequel débouche chacun des canaux d'écoulement annulaires spécifiés ci-avant.

De préférence, le compteur selon l'invention comprend en outre un déflecteur qui s'étend en s'évasant vers le haut depuis la turbine du compteur jusqu'au plan supérieur de sa cuve. Cette disposition évite que l'écoulement ne soit perturbé par l'élargissement de la cuve, et elle contribue à forcer le liquide vers les canaux d'écoulement du dispositif.

Selon une forme de réalisation particulièrement avantageuse, la turbine du compteur selon la présente invention comprend un disque qui est perpendiculaire à l'axe du système, qui porte sur sa périphérie des pales radiales et qui est solidaire d'un moyeu axial s'étendant vers le haut et relié au totalisateur du compteur. Cette disposition est décrite dans le brevet européen n° 116.241 de la Demanderesse, et elle évite que les bouillonnements produits au centre de la turbine n'agissent sur les pales de celle-ci.

Quant aux bouillonnements qui tendent à se produire au-dessus du centre de la turbine et à perturber l'écoulement ascendant du liquide, ils sont, de préférence, emprisonnés dans un cylindre de confinement des bouillonnements, cylindre dont l'axe coïncide avec l'axe du système et qui s'étend entra la turbine du compteur et le plan supérieur de sa cuve.

Dans une forme de réalisation avantageuse, ce cylindre est percé coaxialement dans le déflecteur spécifié ci-avant, et l'extrémité inférieure de ce dernier se raccorde tangentiellement au bas du cylindre, légèrement au-dessus du disque qui porte les pales de la turbine du compteur.

La description qui va suivre, et qui ne présente aucun caractère limitatif, permettra de bien comprendre comment la présente invention peut être mise en pratique. Elle doit être lue en regard des dessins annexés, parmi lesquels:
- La figure 1 montre une vue en coupe axiale schématique du dispositif selon la présente invention ;
- La figure 2 représente, à une plus faible échelle, une vue de dessus du dispositif de la figure 1 dont la turbine a été enlevée ;
- La figure 3 montre une vue en coupe hautement schématique prise selon la ligne III-III de la figure 1 ; et :
- La figure 4 montre une vue en coupe axiale analogue à celle de la figure 1, où la turbine du dispositif a été enlevée et où a été représenté le trajet du liquide en écoulement.

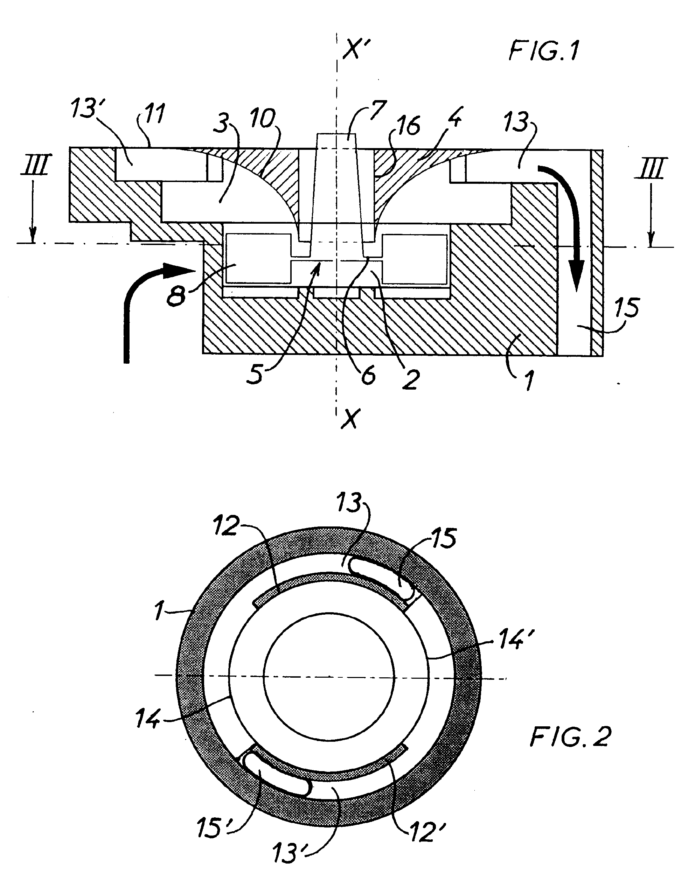

Dans tout ce qui va suivre, on supposera que le compteur selon l'invention se trouve dans sa position représentée sur la figure 1, ou l'axe de rotation de sa turbine est vertical et où le liquide s'écoule de bas en haut, ce qui donne tout leur sens à des expressions comme "vertical" et "horizontal" ou "supérieur" et "inférieur".

Comme on le voit notamment sur les figures 1 et 2, le compteur selon l'invention comprend une cuve 1 comportant trois étages qui sont cylindriques de révolution pour l'essentiel et qui ne sont séparés entre eux par aucune cloison, à savoir un étage inférieur 2, ou étage de mesure, un étage collecteur intermédiaire 3 dont le diamètre est nettement supérieur à celui de l'étage de mesure 2, et un étage supérieur d'écoulement 4 dont le diamètre est à son tour supérieur à celui de l'étage précédent 3.

Dans l'étage inférieur 2 de plus faible diamètre est montée une turbine 5 qui, grâce à des moyens non représentés, peut tourner autour de l'axe vertical X-X′ du système et transmettre son mouvement de rotation au totalisateur du compteur qui n'a pas non plus été représenté. Cette turbine 5 comprend un disque horizontal 6 qui est solidaire d'un moyeu 7 s'étendant vers le haut et qui est muni de pales radiales 8.

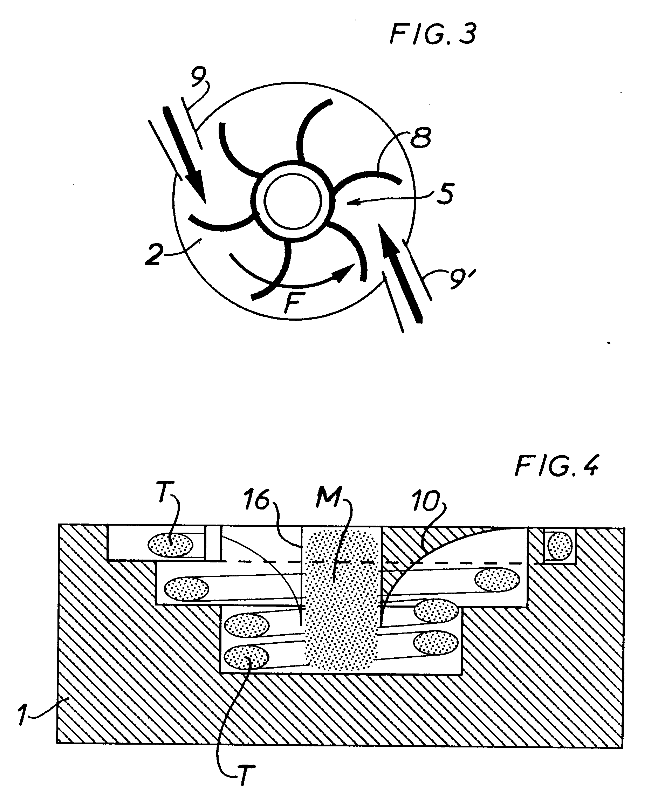

La représentation schématique de la figure 3 montre que le liquide dont il s'agit de mesurer le débit pénètre dans l'étage inférieur 2 de la cuve 1 par deux injecteurs diamétralement opposés 9 et 9′ qui sont dirigés vers le centre des pales 8 de la turbine 5 pour faire tourner cette dernière dans le sens de la flèche F. Les pales 8 sont constituées par des portions de cylindres à axe vertical dont la concavité est, bien entendu, tournée vers l'arrivée du liquide.

A sa partie supérieure, l'étage de mesure 2 s'élargit pour former l'étage collecteur 3, et le liquide introduit par les injecteurs 9 et 9′ le parcourt en suivant un trajet hélicoïdal ascendant indiqué en T sur la figure 4. La présence de l'étage collecteur 3 de diamètre plus important permet de supprimer les turbulences qui se produisaient dans les dispositifs connus et qui perturbaient l'écoulement hydraulique de l'étage de mesure 2.

Pour éviter toutefois que cet élargissement de la cuve 1 ne perturbe à son tour l'écoulement du liquide, il est prévu un déflecteur fixe 10 qui entoure de manière coaxiale le moyeu 7 de la turbine 5 en s'évasant vers le haut. Plus précisément, ce déflecteur est une portion de tore, de révolution autour de l'axe X-X′ du système, dont la courbe génératrice, de forme appropriée, présente une tangente verticale à son extrémité inférieure qui est située légèrement au-dessus du disque 6 de la turbine 5, cependant que son extrémité supérieure se raccorde au plan horizontal supérieur 11 de la cuve 1.

A sa partie supérieure, l'étage collecteur 3 s'élargit à son tour pour former l'étage d'écoulement 4 dont une partie de la périphérie est isolée de l'intérieur de la cuve 1 par deux cloisons verticales 12 et 12′ qui prolongent vers le haut la paroi latérale de l'étage collecteur 3, qui sont diamétralement opposées et dont chacune s'étend environ sur un quart de cercle.

Entre ces cloisons 12 et 12′, d'une part, et, d'autre part, la paroi latérale de l'étage d'écoulement 4, se trouvent ainsi ménagés des canaux annulaires 13 et 13′ qui s'ouvrent vers l'intérieur de la cuve 1 par les intervalles ou lumières 14 et 14′ situées entre les cloisons 12 et 12′. A leur autre extrémité, les canaux 13 et 13′ débouchent dans un ou plusieurs puits verticaux 15, 15′ qui sont dirigés vers le bas, qui traversent la paroi latérale de la cuve 1 et qui rejoignent l'orifice de sortie du compteur.

Le liquide qui arrive dans l'étage d'écoulement 4, en suivant toujours le trajet hélicoïdal ascendant indiqué en T sur la figure 4, pénètre, sous l'effet de sa vitesse, de la force centrifuge et du déflecteur 10, dans les lumières 14 et 14′, puis il s'écoule le long des canaux 13 et 13′, et il débouche dans les puits verticaux 15 et 15′.

L'amenée du liquide dans la cuve 1 par les injecteurs 9 et 9′ produit au centre de l'étage de mesure 2 un bouillonnement bien connu des spécialistes et parfois appelé "malstrom" que l'on a représenté schématiquement en M sur la figure 4. Ce bouillonnement est sans effet sur les pales 8 de la turbine 5, du fait que celles-ci sont montées à la périphérie du disque 6, selon les enseignements du brevet européen n° 116.241 de la Demanderesse.

Pour éviter toutefois que ce malstrom M ne perturbe l'écoulement dans les étages supérieurs 3 et 4 de la cuve 1, le déflecteur 10 est traversé par un perçage cylindrique coaxial 16 sur le bas duquel se raccorde l'extrémité inférieure du déflecteur, et qui, comme ce dernier, s'étend vers le haut jusqu'au plan supérieur horizontal 11 de la cuve 1.

Outre son rôle de confinement du malstrom M, le cylindre plein 16 permet au liquide en bouillonnement d'exercer une pression sur le moyeu 7 de la turbine 5, ce qui maintient celui-ci sur son axe de rotation et limite ainsi au minimum les couples résistants dûs aux frottements, ainsi que l'usure.

## Revendications

1. Compteur de liquide à jets multiples, du genre dans lequel une turbine reliée à un totalisateur est montée en rotation dans une cuve cylindrique munie, à la partie inférieure de sa périphérie, d'orifices d'injection du liquide, et, à sa partie supérieure, de moyens pour évacuer le liquide vers la sortie du compteur, ladite cuve étant une cuve étagée (1) comportant au moins un étage de mesure inférieur (2) dans lequel ladite turbine (5) est montée en rotation et qui est suivi vers le haut, directement et sans aucun obstacle à l'écoulement du liquide, par un étage collecteur (3) de diamètre plus important, caractérisé par le fait que ledit diamètre de l'étage collecteur (3) est nettement plus important que celui de l'étage de mesure inférieur (2), et par le fait que ledit étage collecteur (3) est suivi vers le haut par un étage d'écoulement (4) de diamètre plus important.

2. Compteur selon la revendication 1, caractérisé par le fait que lesdits orifices d'injection sont constitués par deux buses d'injection (9, 9′) qui débouchent dans ledit étage de mesure (2) en deux points diamétralement opposés et qui sont orientées vers le centre des pales (8) de la turbine (5).

3. Compteur selon la revendication 1, caractérisé par le fait qu'une cloison annulaire (12, 12′) présentant au moins une lumière (14, 14′) prolonge vers le haut la périphérie dudit étage collecteur (3), en s'étendant sur toute la hauteur dudit étage d'écoulement (4), le ou les canaux d'écoulement annulaires (13, 13′) ainsi ménagés entre ladite cloison (12, 12′) et la paroi latérale dudit étage d'écoulement (4) étant en communication avec la sortie du compteur.

4. Compteur selon la revendication 3, caractérisé par le fait que ledit ou lesdits canaux d'écoulement annulaires (13, 13′) débouchent dans un ou plusieurs puits (15, 15′) ménagés dans la paroi latérale de ladite cuve (1), parallèlement à l'axe (X-X′) de celle-ci.

5. Compteur selon l'une quelconque des revendications 1 à 4, caractérisé par le fait qu'il comprend en outre un déflecteur (10) qui s'étend en s'évasant vers le haut depuis ladite turbine (5) jusqu'au plan supérieur (11) de ladite cuve (1).

6. Compteur selon l'une quelconque des revendications 1 à 5, caractérisé par le fait qu'il comprend en outre un cylindre fixe (16) de confinement des bouillonnements (M), dont l'axe coïncide avec l'axe (X-X′) du système et qui s'étend entre ladite turbine (5) et le plan supérieur (11) de ladite cuve (1).

7. Compteur selon la revendication 6, caractérisé par le fait que ledit que ledit cylindre (16) est percé coaxialement dans ledit déflecteur (10).

8. Compteur selon l'une quelconque des revendications 1 à 7, caractérisé par le fait que ladite turbine (5) comprend un disque (6) qui est perpendiculaire à l'axe (X-X′) du système, qui porte sur sa périphérie des pales radiales (8) et qui est solidaire d'un moyeu axial (7) s'étendant vers le haut et relié au totalisateur du compteur.

9. Compteur selon la revendication 8, caractérisé par le fait que l'extrémité inférieure dudit déflecteur (10) se raccorde tangentiellement au bas dudit cylindre de confinement (16), légèrement au-dessus dudit disque (6).

## Patentansprüche

1. Mehrstrahlflüssigkeitszähler, bei dem eine mit einem Zählwerk verbundene Turbine in einem zylindrischen Gehäuse drehbar gelagert ist, das am unteren Teil seiner Peripherie mit Flüssigkeitseinspritzöffnungen und an seinem oberen Teil mit Mitteln für die Entleerung der Flüssigkeit in Richtung zum Auslaß des Zählers versehen ist, wobei das Gehäuse ein mehrstufiges Gehäuse (1) ist, umfassend zumindest eine untere Meßstufe (2), in welcher die Turbine (5) drehbar gelagert ist und welcher nach oben direkt und frei von jeglichem Hindernis für den Auslauf der Flüssigkeit eine Sammlerstufe (3) mit größerem Durchmesser folgt, dadurch gekennzeichnet, daß der Durchmesser der Sammlerstufe (3) deutlich größer als derjenige der unteren Meßstufe (2) ist, und daß dieser Sammlerstufe (3) nach oben eine Entleerungstufe (4) mit größerem Durchmesser folgt.

2. Zähler nach Anspruch 1, dadurch gekennzeichnet, daß die Einspritzöffnungen durch zwei Einspritzdüsen (9, 9′) gebildet sind, die in die Meßstufe (2) an zwei diametral einander gegenüberliegenden Punkten einmünden und die zum Zentrum der Schaufeln (8) der Turbine (5) ausgerichtet sind.

3. Zähler nach Anspruch 1, dadurch gekennzeichnet, daß eine ringförmige Zwischenwand (12, 12′), die zumindest ein Fenster (14, 14′) aufweist, den Umfang der Sammlerstufe (3) nach oben verlängert, indem sie sich über die gesamte Höhe der Sammlerstufe (4) erstreckt, wobei der ringförmige Auslaufkanal oder die ringförmigen Auslaufkanäle (13, 13′), die gewissermaßen zwischen der Zwischenwand (12, 12′) und der Seitenwand der Entleerungsstufe (4) vorgesehen sind, mit dem Ausgang des Zählers in Verbindung steht oder stehen.

4. Zähler nach Anspruch 3, dadurch gekennzeichnet, daß der ringförmige Auslaufkanal oder die ringförmigen Auslaufkanäle (13, 13′) in eine oder mehrere Bohrungen (15, 15') münden, die in der Seitenwand des Gehäuses (1) parallel zu dessen Achse (X-X′) angeordnet sind.

5. Zähler nach einem der Ansprüche 1 bis 4, dadurch gekennzeichnet, daß er außerdem einen Deflektor (10) umfaßt, der sich unter trichterförmiger Erweiterung nach oben ausgehend von der Turbine (5) bis zur oberen Ebene (11) des Gehäuses (1) erstreckt.

6. Zähler nach einem der Ansprüche 1 bis 5, dadurch gekennzeichnet, daß er außerdem einen feststehenden Zylinder (16) für den Einschluß der Blasenbildungen (M) umfaßt, dessen Achse mit der Achse (X-X′) des Systems zusammenfällt und der sich zwischen der Turbine (5) und der oberen Eben (11) des Gehäuses (1) erstreckt.

7. Zähler nach Anspruch 6, dadurch gekennzeichnet, daß der Zylinder (6) koaxial in dem Deflektor (10) angelegt ist.

8. Zähler nach einem der Ansprüche 1 bis 7, dadurch gekennzeichnet, daß die Turbine (5) eine Scheibe (6) aufweist, die rechtwinklig zur Achse (X-X′) des Systems steht, an ihrem Umfang radiale Schaufeln (8) trägt und die mit einer axialen Nabe (7) ausgebildet ist, die sich nach oben erstreckt und mit dem Zählwerk verbunden ist.

9. Zähler nach Anspruch 8, dadurch gekennzeichnet, daß das untere Ende des Deflektors (10) sich tangential an das untere Ende des Einschlußzylinders (16) geringfügig oberhalb der Scheibe (6) anschließt.

## Claims

1. Multiple-jet liquid metering device, of the type in which a turbine connected to a counter is mounted so as to rotate in a cylindrical tank provided, at the lower part of its periphery, with liquid-inlet orifices and, at its upper part, with means for discharging the liquid towards the outlet from the metering device, the said tank being a staged tank (1) having at least one bottom measuring stage (2) in which the said turbine (5) is mounted so as to rotate and which is followed, in an upward direction, directly and without any obstacle to the flow of the liquid, by a collecting stage (3) of larger diameter, characterised by the fact that the said diameter of the collecting stage (3) is appreciably greater than that of the bottom measuring stage (2), and by the fact that the said collecting stage (3) is followed, in an upward direction, by an outflow stage (4) of greater diameter.

2. Metering device according to Claim 1, characterised by the fact that the said inlet orifices consist of two inlet nozzles (9, 9′) which open out into the said measuring stage (2) at two diametrically opposed points and which are oriented towards the centre of the vanes (8) of the turbine (5).

3. Metering device according to Claim 1, characterised by the fact that an annular partition (12, 12′) having at least one slot (14, 14′) extends the periphery of the said collecting stage (3) upwards, extending over the entire height of the said outflow stage (4), the annular outflow channels (13, 13′) thus formed between the said partition (12, 12′) and the lateral wall of the said outflow stage (4) being in communication with the outlet from the metering device.

4. Metering device according to Claim 3, characterised by the fact that the said annular outflow channel or channels (13, 13′) open out into one or more shafts (15, 15′) formed in the lateral wall of the said tank (1), parallel to the axis (X-X′) of the latter.

5. Metering device according to any one of Claims 1 to 4, characterised by the fact that it also comprises a deflector (10) which splays out as it extends upwards from the said turbine (5) as far as the top face (11) of the said tank (1).

6. Metering device according to any one of Claims 1 to 5, characterised by the fact that it also comprises a fixed cylinder (16) for the confinement of bubbling (M), the axis of which coincides with the axis (X-X′) of the system and which extends between the said turbine (5) and the top face (11) of the said tank (1).

7. Metering device according to Claim 6, characterised by the fact that the said cylinder (16) passes coaxially through the said deflector (10).

8. Metering device according to any one of Claims 1 to 7, characterised by the fact that the said turbine (5) comprises a disc (6) which is perpendicular to the axis (X-X′) of the system, which carries radial vanes (8) on its periphery and which is integral with an axial hub (7) extending upwards and connected to the counter of the metering device.

9. Metering device according to Claim 8, characterised by the fact that the bottom end of the said deflector (10) is connected tangentially to the bottom of the said confinement cylinder (16), slightly above the said disc (6).
